# EUROPÄISCHE PATENTSCHRIFT

(11) **EP 1 214 860 B1**
(45) Veröffentlichungstag und Bekanntmachung des Hinweises auf die Patenterteilung: **23.12.2009**
(21) Anmeldenummer: 00962504.7
(22) Anmeldetag: 18.09.2000
(51) Int. Cl.: H04Q 11/04

(54) **VERFAHREN UND VORRICHTUNG ZUM EINKANALEMPFANG BZW. MEHRKANALEMPFANG EINES ANALOGEN SIGNALS BZW. EINER VIELZAHL VON ANALOGEN SIGNALEN**
METHOD AND DEVICE FOR SINGLE-CHANNEL RECEPTION OR MULTICHANNEL RECEPTION OF AN ANALOG SIGNAL OR A PLURALITY OF ANALOG SIGNALS
PROCEDE ET DISPOSITIF DE RECEPTION A UN CANAL OU A CANAUX MULTIPLES D'UN SIGNAL ANALOGIQUE OU D'UNE PLURALITE DE SIGNAUX ANALOGIQUES

(30) Priorität: 24.09.1999 DE 19945901
(43) Veröffentlichungstag der Anmeldung: 19.06.2002
(73) Patentinhaber: Infineon Technologies AG, 81669 München (DE)
(72) Erfinder: HONKEN, Stefan, 81929 München (DE)
(74) Vertreter: Reinhard - Skuhra - Weise & Partner GbR
(86) Internationale Anmeldenummer: PCT/EP2000/009138
(87) Internationale Veröffentlichungsnummer: WO 2001/024571

(56) Entgegenhaltungen:
- EP-A- 0 419 278
- US-A- 5 818 740
- NORSWORTHY S R ET AL: "A 13-BIT, 160 KHZ SIGMA-DELTA A/D CONVERTER FOR ISDN" CUSTOM INTEGRATED CIRCUITS CONFERENCE, IEEE, Bd. CONF. 10, 16. - 19. Mai 1988, Seiten 2131-2134, XP000040485 ROCHESTER,NY, USA

## Beschreibung

Die Erfindung betrifft ein Verfahren und eine Vorrichtung zum Einkanalempfang bzw. Mehrkanalempfang eines analogen bzw. einer Vielzahl von analogen Signalen. Ein solches Verfahren ist z.B. aus der EP-A-0 419 278 bekannt.

Beim Empfang von Signalen, insbesondere von über die Zweidraht-Kupferleitung übertragenen ISDN-Signalen (Integrated Services Digital Network), denen ein vorgegebener Takt zugrunde liegt, muß sich ein Empfänger auf diesen Takt synchronisieren. Bei einem ISDN-Übertragungssystem unterscheidet man zwischen einem Empfänger auf der LT-Seite (Line-Termination) und auf der NT-Seite (Network-Termination). Im Betrieb gibt ein Sender auf der LT-Seite den Takt vor, und ein Empfänger auf der NT-Seite synchronisiert sich mittels eines durch einen Quarz vorgegebenen lokalen Taktes auf den vorgegebenen Takt. Der Empfänger auf der NT-Seite muß somit eine Frequenznachführung als auch eine zur Einstellung des optimalen Abtastzeitpunktes erforderliche Phasenregelung eines empfangenen Signals durchführen. Ein Empfänger auf der LT-Seite muß dagegen lediglich eine Phasenregelung eines empfangenen Signals vornehmen, da der Takt durch die LT-Seite bereits vorgegeben wird. Die Frequenznachführung und die Phasenregelung werden mittels eines Phasenregelkreises durchgeführt.

Ein Analog-Digital-Umsetzer im Empfänger wandelt dazu jedes Symbol eines empfangenen analogen Signals, insbesondere eines ISDN-Signals, in jeweils n digitale Werte. Ein dem Analog-Digital-Umsetzer nachgeschalteter Schalter, der von einer Taktregeleinrichtung gesteuert wird, schaltet genau einen der n digitalen Werte auf eine Signalverarbeitungseinrichtung durch. Dieser Wert wird als digitaler Empfangswert bezeichnet. Die Signalverarbeitungseinrichtung arbeitet unter Verwendung der digitalen Empfangswerte Signalverarbeitungsalgorithmen zur Entzerrung und Echokompensation des empfangenen Signals ab. Zur Echokompensation ist die Zuführung der gesendeten Daten notwendig. Ferner erzeugt die Signalverarbeitungseinrichtung aus den digitalen Empfangswerten ein Regelsignal, das die Taktregeleinrichtung zur Frequenznachführung und Phasenregelung steuert. In Abhängigkeit von der mit dem Regelsignal übertragenen Regelinformation wird der Abtastzeitpunkt, d.h. die Auswahl genau eines der n digitalen Werte eines Symbols u.U. verschoben und somit die Periodendauer des Symbols gegebenenfalls verkürzt oder verlängert. Liefert der Analog-Digital-Umsetzer in einer Symbolperiode n digitale Werte und beträgt die nicht verkürzte oder verlängerte Symbolperiode die Zeitdauer Tsn, kann die Symboldauer Ts aufgrund der Taktregelung im Empfänger beispielsweise Werte von (n - 1)·Td, n·Td oder (n + 1)·Td annehmen. Td bezeichnet die Schrittlänge zur Regelung und beträgt Tsn/n. Aufgrund des Regelvorgangs ergibt sich für die durch die Signalverarbeitungsvorrichtung auszuführenden Empfangsalgorithmen eine variable Verarbeitungszeit. Zum Empfangen mehrerer analoger Signale, insbesondere mehrerer ISDN-Kanäle, müssen beim derzeitigen Stand der Technik entsprechend viele Empfänger vorgesehen sein. Dies bedingt einen hohen Hardwareaufwand und verursacht insbesondere bei einer Ausführung der gesamten Anordnung in einer integrierten Schaltung hohe Kosten.

Der Erfindung liegt daher die Aufgabe zugrunde, ein Verfahren zum Empfang eines analogen Signals, insbesondere eines ISDN-Signals, anzugeben, das das Problem der variablen Verarbeitungszeit löst und zugleich eine Erweiterung zum effizienten Mehrkanalempfang einer Vielzahl von analogen Signalen, insbesondere ISDN-Signalen ermöglicht, sowie eine Vorrichtung zur Durchführung des Verfahrens aufzuzeigen, die mit einfachen Mitteln ebenfalls kostengünstig auszuführen ist.

Diese Aufgabe wird durch ein Verfahren nach Patentanspruch 1 bzw. 2 und durch eine Vorrichtung nach Patentanspruch 17 bzw. 18 gelöst. Bevorzugte Ausführungsformen der Erfindung sind Gegenstand der Unteransprüche.

Die Erfindung betrifft ein Verfahren zum Mehrkanalempfang einer Vielzahl von analogen Signalen entsprechend einer Vielzahl von Kanälen, wobei jedes analoge Signal eine Vielzahl von Symbolen beinhaltet. In der folgenden Ausführung stellt der Fall des Einkanalempfangs eines analogen Signals eine Sonderform des beschriebenen Verfahrens zum Mehrkanalempfang einer Vielzahl von analogen Signalen dar, bei der die Kanalanzahl k = 1 ist.

Jedes analoge Eingangssignal wird mit Hilfe eines Analog-Digital-Umsetzers in einen digitalen Datenstrom umgesetzt, wobei jeweils ohne Berücksichtigung der Taktregelung n digitale Werte pro Symbolperiode bereitgestellt werden. Die digitalen Werte werden für jeden Kanal jeweils einem Schalter zugeführt, der jeweils von einer Taktreaelschaltung gesteuert wird und genau einen der n digitalen Werte, also einen digitalen Empfangswert pro Symbolperiode, an den jeweils dem Schalter nachgeschalteten ersten Pufferspeicher weiterreicht, der mindestens einen digitalen Empfangswert speichert. Der Ausgang des ersten Pufferspeichers ist mit einer Signalverarbeitungseinrichtung verbunden. Die Signalverarbeitungseinrichtung hält für jeweils einen digitalen Empfangswert eines Kanals einen festen Verarbeitungszeitraum für die Ausführung der digitalen Empfangsalgorithmen vor, wobei die für die Verarbeitung aller Kanäle benötigte Gesamtverarbeitungszeit geringer oder gleich der aufgrund der Regelung verkürzten Symboldauer ist. Die Signalverarbeitungeinrichtung verarbeitet die digitalen Empfangswerte der Kanäle zeitlich nacheinander. Der Beginn des Verarbeitungszeitraums für den jeweiligen Kanal wird von der Signalverarbeitungseinrichtung jeweils durch ein Steuersignal angezeigt. Dieses Steuersignal entspricht dem festen Empfangstakt der Signalverarbeitungseinrichtung für den jeweiligen Kanal. Die festen Empfangstakte der Kanäle sind entsprechend den festen Verarbeitungszeiträumen gegeneinander verschoben. Jedem ersten Pufferspeicher ist eine Signalverarbeitungssteuerung zugeordnet, die der Signalverarbeitungseinrichtung über ein Steuersignal den Zustand des jeweiligen ersten Pufferspeichers anzeigt. Zeigt das einem Kanal zugeordnete Steuersignal zum Zeitpunkt des zugehörigen Empfangstaktes der Signalverarbeitungseinrichtung die Verfügbarkeit eines digitalen Empfangswerts an, so wird dieser Wert in die Signalverarbeitungseinrichtung übernommen und nach der Ausführung der Signalverarbeitungsalgorithmen, also nach dem für den jeweiligen Kanal vorgesehenen Verarbeitungszeitraum, in einem dem jeweiligen Kanal zugeordneten zweiten Pufferspeicher, der mindestens einen digitalen Ausgangswertesatz speichert, gespeichert. Ein Ausgangswertesatz beinhaltet neben dem entschiedenen Symbol die für die Durchführung der Regelung notwendige Regelinformation. Diese Ausgangsdaten können dann wieder mit dem geregelten Symboltakt, der von der Taktregeleinrichtung bereitgestellt wird, an nachfolgende Komponenten bzw. die Taktregeleinrichtung weitergereicht werden. Zeigt das einem Kanal zugeordnete Steuersignal zum Zeitpunkt des zugehörigen Empfangstaktes der Signalverarbeitungseinrichtung an, daß kein neuer Empfangswert verfügbar ist, so wird der Verarbeitungszeitraum nicht genutzt, und es werden keine Ausgangsdaten in den zweiten Pufferspeicher geschrieben. Die Signalverarbeitungseinrichtung wird in diesem Fall für die Zeitdauer des nicht genutzten Verarbeitungszeitraums deaktiviert oder steht für andere Aufgaben zur Verfügung.

Gemäß diesem Verfahren werden die jeweils zu einem Symbol gehörigen Empfangswerte aller Kanäle innerhalb der Gesamuverarbeitungszeit der Signalverarbeitungseinrichtung verarbeitet. Die Gesamtdauer entspricht der Periodendauer der festen Empfangstakte der Kanäle. Wird die Signalverarbeitungseinrichtung mit einem Systemtakt f mit einer Periode Tf betrieben, und benötigt die Signalverarbeitungseinrichtung für die Ausführung der Signalverarbeitungsalgorithmen für einen digitalen Empfangswert eines Kanals i Systemtakte, so beträgt die Gesamtverarbeitungszeit i·Tf·k, wobei k die Anzahl der Kanäle ist. Die Symbolperiodendauer Ts kann aufgrund der Taktregelung beispielsweise (n-1)·Td, n·Td oder (n+1)·Td betragen, wobei Td die Regelschrittlänge ist. Die nominale, d.h. die nicht verkürzte oder verlängerte Symbolperiodendauer Tsn beträgt für alle Kanäle n·Td. Die Gesamtverarbeitungszeit der Signalverarbeitungseinrichtung muß kleiner oder gleich der verkürzten Symboldauer sein, genauer gesagt muß für dieses Beispiel der folgende Zusammenhang gelten: (i·Tf)·k ≤ (n-1)·Td. Das hier beschriebene Verfahren eignet sich sowohl für die Realisierung von Einkanalempfängern als auch für die Realisierung von Mehrkanalempfängern.

Im Gegensatz zu k-Empfängern entsprechend k Kanälen wird bei dem erfindungsgemäßen Verfahren eine Signalverarbeitungseinrichtung zur Verarbeitung von mehreren Kanälen bzw. Signalen benutzt, wodurch sich natürlich der verfahrensgemäße Aufwand entsprechend verringern läßt. Dies ist nur möglich, da für jeden Kanal in der Signalverarbeitungseinrichtung ein eindeutig bestimmter Verarbeitungszeitraum vorgesehen ist, der in Abhängigkeit von dem jeweiligen Steuersignal des Kanals genutzt wird. Somit ist eine völlig unabhängige Verarbeitung der einzelnen Kanäle möglich.

Vorteilhaft läßt sich das Verfahren insbesondere bei Ein- und Vierkanalrealisierungen von ISDN-Empfängern (LT-, NT- und kombinierte LT/NT-Lösungen) einsetzen. Das Verfahren ist jedoch auf eine beliebige Anzahl von Kanälen, insbesondere auf 8 oder 16 Kanäle, erweiterbar, wobei lediglich die Signalverarbeitungseinrichtung entsprechend der vorgenannten Voraussetzung schneller getaktet werden muß bzw. deren Rechenleistung entsprechend vergrößert werden muß. Prinzipiell ist dieses Verfahren auch für eine Ein- oder Mehrkanalrealisierung anderer DSL-Empfänger (DSL: Digital Subscriber Line) geeignet.

Vorzugsweise wird jedes analoge Signal jeweils mit einem Analog-Digital-Umsetzer nach dem Sigma-Delta-Verfahren umgesetzt, wobei von jedem Symbol des analogen Signals n Abtastwerte genommen werden und in n digitale Werte umgesetzt werden. Durch die Überabtastung nach dem Sigma-Delta-Verfahren werden somit pro Symbolperiode n digitale Werte erzeugt, die sich für eine sehr genaue Phasenregelung und gegebenenfalls Frequenznachführung im Empfänger eignen.

Vorzugsweise wird genau einer der n digitalen Werte von dem jeweiligen Schalter an den jeweiligen ersten Pufferspeicher durchgeschaltet.

In einer bevorzugten Ausführungsform steuert jede Taktregeleinrichtung den jeweiligen Schalter dadurch, daß von der Taktregeleinrichtung ein von der Signalverarbeitungseinrichtung gesendetes Regelsignal zur Auswahl eines der n digitalen Werte ausgewertet wird.

Entsprechend der Vielzahl von Kanälen bzw. Signalen ist eine Vielzahl von dritten Pufferspeichern in einer bevorzugten Ausführungsform vorgesehen, wobei jeder dritte Pufferspeicher jeweils ein einem analogen Empfangssignal zugeordnetes digitales Sendesignal speichert und der Ausgang jedes dritten Pufferspeichers der Signalverarbeitungseinrichtung zur Echokompensation zugeführt wird.

Vorzugsweise erzeugt jede Taktregeleinrichtung ein zweites Taktsignal, das den jeweiligen dritten Pufferspeichern zur Taktung zugeführt werden, so daß die dritten Pufferspeicher synchron zu den weiteren Elementen des Verfahrens arbeiten.

Insbesondere kann die digitale Signalverarbeitungseinrichtung in Form eines DSP (Digitaler Signalprozessor) realisiert werden.

In einer bevorzugten Ausführungsform führt die Signalverarbeitungseinrichtung ein Programm aus einem Festwertspeicher zur Echokompensation und Entzerrung aus.

Ferner betrifft die Erfindung eine Vorrichtung zum Einkanalempfang oder Mehrkanalempfang eines analogen Signals oder einer Vielzahl von analogen Signalen entsprechend einer Vielzahl von Kanälen, wobei jedes analoge Signal jeweils einem Analog-Digital-Umsetzer zugeführt wird, der Ausgang jedes Analog-Digital-Umsetzer über jeweils einen Schalter mit jeweils einem ersten Pufferspeicher verbunden ist, der Ausgang jedes ersten Pufferspeichers mit einer Signalverarbeitungseinrichtung verbunden ist, jeder Schalter jeweils von einer Taktregeleinrichtung gesteuert wird, jeder erste Pufferspeicher jeweils von einer Signalverarbeitungssteuerung gesteuert wird, jede Signalverarbeitunassteuerung ein Signal an die Signalverarbeitungseinrichtung überträgt, um den Zustand des ersten Pufferspeichers zu signalisieren, die Signalverarbeitungseinrichtung jedes verarbeitete Signal jeweils in einem dem jeweiligen Kanal zugeordneten zweiten Pufferspeicher speichert.

Vorzugsweise arbeiten die Analog-Digital-Umsetzer gemäß dem Sigma-Delta-Verfahren.

In einer bevorzugen Ausführungsform der Vorrichtung ist entsprechend der Vielzahl von Kanälen eine Vielzahl von dritten Pufferspeichern vorgesehen, wobei jeder dritte Pufferspeicher jeweils ein einem analogen Empfangssignal zugeordnetes digitales Sendesignal speichert und der Ausgang jedes dritten Pufferspeichers der Signalverarbeitungseinrichtung zur Echokompensation zugeführt wird.

Die Signalverarbeitungseinrichtung weist vorzugsweise einen Festwertspeicher auf, in dem ein Programm zur Echokompensation und Entzerrung gespeichert ist. Hier zeigt sich ein besonderer Vorteil der erfindungsgemäßen Vorrichtung, nämlich daß im wesentlichen lediglich ein Festwertspeicher und lediglich eine Signalverarbeitungseinrichtung zur Verarbeitung einer Vielzahl von Kanälen vorgesehen werden muß. Im Gegensatz dazu sind beim Stand der Technik entsprechend der Vielzahl von zu verarbeitenden Kanälen Festwertspeicher und Signalverarbeitungseinrichtungen vorzusehen. Das Programm zur Verarbeitung der Vielzahl von Kanälen ist das gleiche wie das Programm zur Verarbeitung eines Kanals, Aufgrund der sequentiellen Verarbeitung der Kanäle wird das Programm entsprechend der Kanalanzahl mehrfach nacheinander abgearbeitet. Insgesamt ergibt sich eine beträchtliche Einsparung an Programmspeicherplatz. Zudem wird Schreib-/Lesespeicher zur Speicherung von Variablen gespart, da nicht für jeden Kanal jeweils ein Schreib-/Lesespeicher vorgesehen werden muß, sondern ein für alle Kanäle gemeinsamer Schreib-/Lesespeicher ausreichend ist.

Schließlich ist die Vorrichtung bevorzugt als Teil einer integrierten Schaltung ausgeführt. Hierbei ergibt sich insbesondere der Vorteil, daß bei der erfindungsgemäßen Vorrichtung weniger Chipfläche benötigt wird, als bei einem Empfänger für jeweils einen Kanal.

Weitere Vorteile und Anwendungsmöglichkeiten der Erfindung ergeben sich aus der nachfolgenden Beschreibung eines Ausführungsbeispiels in Verbindung mit den Zeichnungen. In den Zeichnungen zeigt
Fig. 1 ein Blockschaltbild eines Ausführungsbeispiels der erfindungsgemäßen Vorrichtung, und
Fig. 2 ein Zeitdiagramm von Signalen, die beim Ablauf des erfindungsgemäßen Verfahrens auftreten.

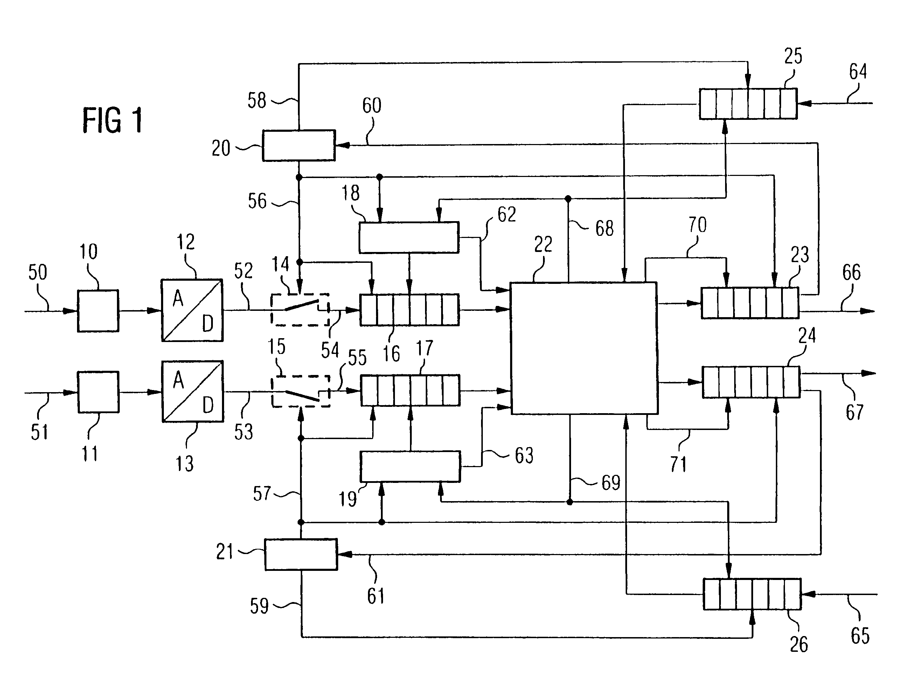

Die in Figur 1 dargestellte Vorrichtung dient zum Empfangen von zwei analogen Signalen 50 und 51 entsprechend zwei ISDN-Kanälen. Die beiden analogen Signale 50 und 51 werden jeweils einem Antialiasing-Filter 10 bzw. 11 zugeführt. Die Antialiasing-Filter 10 bzw. 11 führen eine Tiefpaßfilterung zur Bandbegrenzung der analogen Signale für eine anschließende Analog-Digital-Wandlung mittels der Sigma-Delta-Analog-Digital-Umsetzer 12 bzw. 13 durch. Am Ausgang jedes Sigma-Delta-Analog-Digital-Umsetzers 12 bzw. 13 liegen pro Symbol des jeweiligen analogen Signals n digitale Werte 52 bzw. 53 an. Davon wird jeweils mittels eines jedem Sigma-Delta-Analog-Digital-Umsetzer 12 und 13 nachgeschalteten Schalters 14 bzw. 15 in jeweils einen ersten Pufferspeicher 16 bzw. 17 genau ein Wert 54 bzw. 55 der n digitalen Werte 52 bzw. 53 geschrieben, der hier als digitaler Empfangswert bezeichnet wird. Die Ausgänge der ersten Pufferspeicher 16 und 17 sind mit einer Signalverarbeitungseinrichtung 22 verbunden.

Die beiden Schalter 14 und 15 werden jeweils durch einen von einer Taktregeleinrichtung 20 bzw. 21 erzeugten geregelten Symboltakt 56 bzw. 57 derart gesteuert, daß eine Phasenregelung bei einem Einsatz der Schaltungsanordnung in einem Empfänger auf der LT-Seite und zusätzlich eine Frequenznachführung bei einem Empfänger auf der NT-Seite durchgeführt wird. Dabei wird die Phasenregelung und die Frequenznachführung durch die Auswahl genau eines der n digitalen Werte 52 bzw. 53 mittels des Schalters 14 bzw. 15 bestimmt. Jede Taktregeleinrichtung 20 und 21 empfängt jeweils ein Regelsignal 60 bzw. 61 von der Signalverarbeitungseinrichtung 22, genauer gesagt über zweite Pufferspeicher 23 und 24, in welche die Signalverarbeitungseinrichtung 22 außer der Regelinformation Nutzsignale entsprechend den entzerrten und echokompensierten empfangenen Signalen schreibt.

Der erste Pufferspeicher 16 bzw. 17 jedes Kanals wird zur Zwischenspeicherung von digitalen Empfangswerten benötigt, da der Signalverarbeitungseinrichtung 22 für jeden Kanal nur jeweils eine bestimmte Verarbeitungszeit zur Verfügung steht. Das Beschreiben der ersten Pufferspeicher 16 und 17 wird mittels eines geregelten Symboltakts 56 bzw. 57 durchgeführt, der von der Taktregeleinrichtung 20 bzw. 21 zur Verfügung gestellt wird. Somit erfolgt das Beschreiben des ersten Pufferspeichers 16 bzw. 17 mit dem gleichen Takt, der auch zur Steuerung der Schalter 14 bzw. 15 benutzt wird, also dem geregelten Symboltakt. Jeder erste Pufferspeicher 16 und 17 wird jeweils von einer Signalverarbeitungssteuerung 18 bzw. 19 gesteuert, die wiederum von einem festen Empfangstakt 68 bzw. 69 der Signalverarbeitungseinrichtung 22 zum Auslesen des jeweiligen ersten Pufferspeichers 16 bzw. 17 getaktet wird. Das Lesen der Pufferspeicher 16 bzw. 17 erfolgt somit synchron zu dem von der Signalverarbeitungseinrichtung 22 vorgegebenen festen Empfangstakt 68 bzw. 69. Die Signalverarbeitungssteuerungen 18 bzw. 19 werten die Steuersignale zur Steuerung des Schreibzugriffs 56 bzw. 57 und des Lesezugriffs 68 bzw. 69 auf den ersten Pufferspeicher 16 bzw. 17 aus und führen ferner jeweils ein Steuersignal 62 bzw. 63 zu der Signalverarbeitungseinrichtung 22, das den Zustand des ersten Pufferspeichers 16 bzw. 17 anzeigt. Ist der erste Pufferspeicher 16 bzw. 17 leer, wird nämlich mittels des Steuersignals 62 bzw. 63 der dem jeweiligen Kanal zur Verfügung stehende Verarbeitungszeitraum in der Signalverarbeitungseinrichtung 22 deaktiviert. In diesem Fall ist die Signalverarbeitungseinrichtung 22 inaktiv oder steht beispielsweise für andere Aufgaben zur Verfügung.

Die Taktregeleinrichtungen 20 und 21 erzeugen ferner einen Sendetakt 58 bzw. 59 zur Taktung des Beschreibens eines dritten Pufferspeichers 25 bzw. 26, in dem digitale Werte 64 bzw. 65 eines Sendesignals gespeichert werden. Die in den dritten Pufferspeicher 25 bzw. 26 abgelegten digitalen Werte dienen zur Echokompensation der analogen Empfangssignale 50 bzw. 51. Dazu wird der Ausgang des dritten Pufferspeichers 25 bzw. 26 mit der Signalverarbeitungseinrichtung 22 verbunden, welche die Sendesymbole mittels eines Algorithmus zur Echokompensation verarbeitet.

Die von der Signalverarbeitungseinrichtung 22 verarbeiteten Empfangssignale (entschiedene Symbole) und zusätzlich die Regelinformation werden für jeden Kanal jeweils in dem zweiten Pufferspeicher 23 bzw. 24 jeweils mit dem festen Schreibtakt 70 bzw. 71 am Ende der jeweiligen Verarbeitungszeitdauer gespeichert. Am Ausgang des zweiten Pufferspeichers 23 bzw. 24 stehen dann die verarbeiteten Nutzsymbole als digitale Werte 66 bzw. 67 entsprechend den insbesondere entzerrten und echokompensierten empfangenen analogen Signalen 50 bzw. 51 zur Verfügung. Die zweiten Pufferspeicher 23 und 24 werden jeweils mit dem geregelten Symboltakt 56 bzw. 57 ausgelesen.

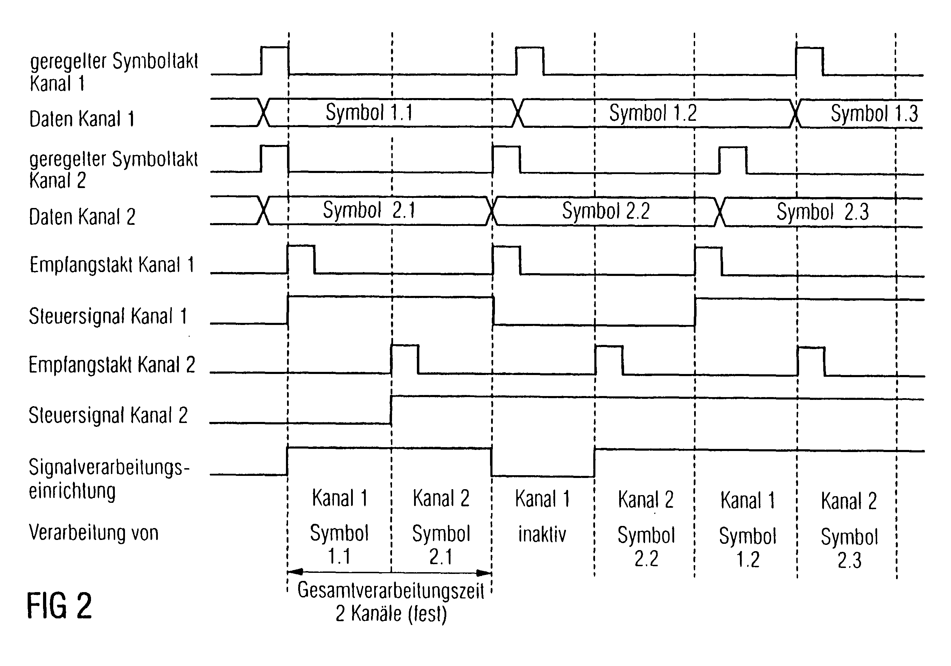

In Figur 2 sind in einem Zeitdiagramm wesentliche Signale der Vorrichtung aus Figur 1 dargestellt. Für jeden Kanal 1 und 2 ist jeweils abwechselnd eine vorgegebene Periode entsprechend dem zur Verfügung stehenden Bearbeitungszeitraum der Signalverarbeitungseinrichtung dargestellt.

Jeder Kanal weist einen eigenen geregelten Symboltakt auf, der von der Phase und der Frequenz des jeweiligen Empfangssignals abhängt und somit entsprechend verkürzt oder verlängert sein kann. Die Symboltakte der Kanäle können somit eine variable Periodendauer aufweisen. Die Gesamtverarbeitungszeit, die die Signalverarbeitungseinrichtung für die Bearbeitung der beiden Kanäle benötigt, muß kleiner oder gleich der verkürzten Symbolperiode sein. Jeder Kanal weist einen eigenen festen Empfangstakt auf, mit dem der erste Pufferspeicher des jeweiligen Kanals ausgelesen wird und mit dem die Signalverarbeitungseinrichtung einen digitalen Empfangswert des entsprechenden Kanals empfängt. Die Empfangstakte der Kanäle sind entsprechend der Verarbeitungszeit, die die Signalverarbeitungseinrichtung für die Verarbeitung eines Empfangswerts eines Kanals benötigt, gegeneinander verschoben. Das für jeden Kanal vorgesehene Steuersignal aktiviert den für den jeweiligen Kanal von der Signalverarbeitungseinrichtung vorgesehenen Zeitschlitz zur Verarbeitung des Kanals. Ist der erste Pufferspeicher eines Kanals beispielsweise leer, deaktiviert das entsprechende Steuersignal den Verarbeitungszeitschlitz in der Signalverarbeitungseinrichtung.

## Patentansprüche

1. Verfahren zum Einkanalempfang eines analogen Signals, wobei
- das analoge Signal (50) eine Vielzahl von Symbolen aufweist und in ein digitales Signal (52) entsprechend einer Vielzahl von digitalen Werten umgesetzt wird,
- das digitale Signal (52) einem Schalter (14) zugeführt wird,
- der Schalter (14) von einer Taktregeleinrichtung (20) gesteuert wird,
- dem Schalter (14) ein erster Pufferspeicher (16) nachgeschaltet ist, der mindestens einen von dem Schalter durchgeschalteten digitalen Empfangswert (54) des digitalen Signals (52) speichert,
- der Ausgang des ersten Pufferspeichers mit einer Signalverarbeitungseinrichtung (22) verbunden ist,
- für das digitale Signal eine Signalverarbeitungssteuerung (18) vorgesehen ist,
- die Signalverarbeitungssteuerung ein Steuersignal (62) an die Signalverabeitungseinrichtung sendet, das den Zustand des Pufferspeichers anzeigt,
- die Signalverarbeitungseinrichtung (22) den digitalen Empfangswert in einen vorbestimmten Verarbeitungszeitraum bei Vorhandensein des Steuersignals (62) verarbeitet, und
- die Signalverarbeitungseinrichtung (22) das verarbeitete Signal in einem zweiten Pufferspeicher (23) speichert.

2. Verfahren zum Mehrkanalempfang einer Vielzahl von analogen Signalen entsprechend einer Vielzahl von Kanälen, wobei
- jedes analoge Signal (50, 51) eine Vielzahl von Symbolen aufweist und in ein digitales Signal (52 ,53) umgesetzt wird,
- jedes digitale Signal (52, 53) jeweils einem Schalter (14, 15) zugeführt wird,
- jeder Schalter (19, 15) jeweils von einer Taktregeleinrichtung (20, 21) gesteuert wird,
- jedem Schalter (14, 15) jeweils ein erster Pufferspeicher (16, 17) nachgeschaltet ist, der mindestens einen von dem Schalter durchgeschalteten digitalen Empfangswert (54, 55) des digitalen Signals (52, 53) speichert,
- der Ausgang jedes ersten Pufferspeichers mit einer Signalverarbeitungseinrichtung (22) verbunden ist,
- für jedes digitale Signal jeweils eine Signalverarbeitungssteuerung (18, 19) vorgesehen ist,
- jede Signalverarbeitungssteuerung ein Steuersignal (62, 63) an die Signalverabeitungseinrichtung sendet, das den Zustand des jeweiligen Pufferspeichers anzeigt,
- die Signalverarbeitungseinrichtung (22) den digitalen Empfangswert eines Kanals in jeweils einem vorbestimmten Verarbeitungszeitraum bei Vorhandensein des jeweiligen Steuersignal (62, 63) verarbeitet, und
- die Signalverarbeitungseinrichtung das verarbeitete Signal jeweils in einem dem jeweiligen Kanal zugeordneten zweiten Pufferspeicher (23, 24) speichert.

3. Verfahren nach Anspruch 1 oder 2, **dadurch gekennzeichnet, daß** jedes analoge Signal jeweils mit einem Analog-Digital-Umsetzer (12, 13) umgesetzt wird, wobei von jedem Symbol des analogen Signals n Abtastwerte genommen werden und in n digitale Werte umgesetzt werden.

4. Verfahren nach Anspruch 3, **dadurch gekennzeichnet, daß** genau einer der n digitalen Werte von dem jeweiligen Schalter (14, 15) an den jeweiligen ersten Pufferspeicher (16, 17) durchgeschaltet wird.

5. Verfahren nach Anspruch 4, **dadurch gekennzeichnet, daß** jede Taktregeleinrichtung (20, 21) den jeweiligen Schalter (14, 15) derart steuert, daß von der Taktregeleinrichtung (20, 21) ein von der Signalverarbeitungseinrichtung (22) gesendetes Regelsignal (60, 61) zur Auswahl eines der n digitalen Werte ausgewertet wird.

6. Verfahren nach einem der vorangegangenen Ansprüche, **dadurch gekennzeichnet, daß** jeder Schalter (14, 15) von einem durch eine jeweils dem Schalter zugeordneten Taktregeleinrichtung (20, 21) erzeugten geregelten Symboltakt (56, 57) gesteuert wird, so daß jeweils genau ein digitaler Empfangswert pro Symbol durchgeschaltet wird.

7. Verfahren nach einem der vorangegangenen Ansprüche, **dadurch gekennzeichnet, daß** die durch die Taktregeleinrichtung (20, 21) durchgeführte Taktregelung ein in bestimmten Grenzen variablen Symboltakt (56, 57) und Symbolperiodendauer für jeden Kanal erzeugt.

8. Verfahren nach einem der vorangegangenen Ansprüche, **dadurch gekennzeichnet, daß** die Signalverarbeitungseinrichtung (22) mit einer konstanten Verarbeitungsfrequenz betrieben wird.

9. Verfahren nach Anspruch 8, **dadurch gekennzeichnet, daß** für jeden Kanal der Empfangstakt (68, 69) für das Auslesen der digitalen Empfangswerte aus dem ersten Pufferspeicher (16, 17) und das Einlesen der digitalen Empfangswerte in die Signalverarbeitungseinrichtung (22) konstant ist.

10. Verfahren nach einem der Ansprüche 8 oder 9, **dadurch gekennzeichnet, daß** im Fall des Mehrkanalempfangs die konstanten Empfangstakte (68, 69) der Signalverarbeitungseinrichtung (22) entsprechend den Verarbeitungszeiträumen der Kanäle gegeneinander verschoben sind.

11. Verfahren nach einem der vorangegangenen Ansprüche, **dadurch gekennzeichnet, daß** die Gesamtverarbeitungszeit, die die Signalverarbeitungseinrichtung (22) für die Verarbeitung der digitalen Empfangswerte benötigt, kürzer oder gleich der durch die Taktregelung maximal verkürzten Symbolperiodendauer des Kanals ist, der von allen angeschlossenen Kanälen mit der höchsten Frequenz betrieben wird.

12. Verfahren nach einem der vorangegangenen Ansprüche, **dadurch gekennzeichnet, daß** jede Signaiverarbeitungssteuerung (18, 19) jeweils die Schreib- und Lesezugriffe auf den ersten Pufferspeicher auswertet und ein Steuersignal (62, 63) an die Signalverarbeitungseinrichtung (22) sendet, das für den Fall, daß zum Zeitpunkt des Lesezugriffs auf den ersten Pufferspeicher (16, 17) ein neuer digitaler Empfangswert im ersten Pufferspeicher verfügbar ist, die Signalverarbeitungseinrichtung (22) aktiviert und für den Fall, daß aufgrund der im Vergleich zum geregelten Symboltakt (56, 57) schnelleren Signalverarbeitungseinrichtungen zum Zeitpunkt des Lesezugriffs auf den ersten Pufferspeicher kein neuer digitaler Empfangswert verfügbar ist, die Signalverarbeitungseinrichtung für die Zeitdauer des für den jeweiligen Kanal reservierten Zeitraums deaktiviert, so daß kein neuer digitaler Empfangswert des jeweiligen Kanals in die Signalverarbeitungseinrichtung übernommen wird.

13. Verfahren nach einem der vorangegangenen Ansprüche, **dadurch gekennzeichnet, daß** jedes analoge Signal jeweils mit einem Analog-Digital-Umsetzer (12, 13) nach dem Sigma-Delta-Verfahren umgesetzt wird.

14. Verfahren nach einem der vorhergehenden Ansprüche, **dadurch gekennzeichnet, daß** entsprechend der Vielzahl von Kanälen eine Vielzahl von dritten Pufferspeichern (25, 26) vorgesehen ist, wobei jeder dritte Pufferspeicher (25, 26) jeweils ein einem analogen Signal (50, 51) zugeordnetes digitales Sendesignal (64, 65) speichert und der Ausgang jedes dritten Pufferspeichers der Signalverarbeitungseinrichtung (22) zur Echokompensation zugeführt wird.

15. Verfahren nach Anspruch 14, **dadurch gekennzeichnet, daß** jede Taktregeleinrichtung (20, 21) ein zweites Taktsignal (58, 59) erzeugt, das dem jeweiligen dritten Pufferspeicher (25, 26) zur Taktung zugeführt wird.

16. Verfahren nach einem der vorhergehenden Ansprüche, **dadurch gekennzeichnet, daß** die Signalverarbeitungseinrichtung (22) ein Programm aus einem Festwertspeicher zur Echokompensation und Entzerrung ausführt.

17. Vorrichtung zum Einkanalempfang eines analogen Signals, wobei
- das analoge Signal (50) einem Analog-Digital-Umsetzer (12) zugeführt wird,
- der Ausgang des Analog-Digital-Umsetzers über einen Schalter (14) mit einem ersten Pufferspeicher (16) verbunden ist,
- der Ausgang des ersten Pufferspeichers (16) mit einer Signalverarbeitungseinrichtung (22) verbunden ist,
- der Schalter (14) von einer Taktregeleinrichtung (20) gesteuert wird,
- eine Signalverabeitungssteuerung (18) ein Steuersignal (62) an die Signalverarbeitungseinrichtung (22) überträgt, um den Zustand des ersten Pufferspeichers (16) zu signalisieren, und
- die Signalverarbeitungseinrichtung (22) die digitalen Empfangswerte in Abhängigkeit von dem Steuersignal (62) verarbeitet und das verarbeitete Signal in einem zugeordneten zweiten Pufferspeicher (23) speichert.

18. Vorrichtung zum Mehrkanalempfang einer Vielzahl von analogen Signalen entsprechend einer Vielzahl von Kanälen, wobei
- jedes analoge Signal (50, 51) jeweils einem Analog-Digital-Umsetzer (12, 13) zugeführt wird,
- der Ausgang jedes Analog-Digital-Umsetzers über jeweils einen Schalter (14 ,15) mit jeweils einem ersten Pufferspeicher (16, 17) verbunden ist,
- der Ausgang jedes ersten Pufferspeichers (16, 17) mit einer Signalverarbeitungseinrichtung (22) verbunden ist,
- jeder Schalter (14, 15) jeweils von einer Taktregeleinrichtung (20, 21) gesteuert wird,
- für jeden Kanal eine Signalverarbeitungssteuerung (18, 19) vorgesehen ist, und jede Signalverabeitungssteuerung (18, 19) ein Steuersignal (62, 63) an die Signalverabeitungseinrichtung (22) überträgt, um den Zustand des ersten Pufferspeichers (16, 17) zu signalisieren, und
- die Signalverarbeitungseinrichtung (22) die digitalen Empfangswerte der Kanäle jeweils in Abhängigkeit vom jeweiligen Steuersignal (62, 63) verarbeitet und jedes verarbeitete Signal jeweils in einem dem jeweiligen Kanal zugeordneten zweiten Pufferspeicher (23, 24) speichert.

19. Vorrichtung nach Anspruch 17 oder 18, **dadurch gekennzeichnet, daß** die Analog-Digital-Umsetzer (12, 13) gemäß dem Sigma-Delta-Verfahren arbeiten.

20. Vorrichtung nach einem der Ansprüche 17 - 19, **dadurch gekennzeichnet, daß** entsprechend der Vielzahl von Kanälen eine Vielzahl von dritten Pufferspeichern (25, 26) vorgesehen ist, wobei jeder dritte Pufferspeicher (25, 26) jeweils ein einem analogen Signal (50, 51) zugeordnetes digitales Sendesignal (64, 65) speichert und der Ausgang jedes dritten Pufferspeichers der Signalverarbeitungseinrichtung (22) zur Echokompensation zugeführt wird.

21. Vorrichtung nach einem der Ansprüche 17 - 20, **dadurch gekennzeichnet, daß** die Signalverarbeitungseinrichtung (22) einen Festwertspeicher aufweist, in dem ein Programm zur Echokompensation und Entzerrung gespeichert ist.

22. Vorrichtung nach einem der Ansprüche 17 - 21, **dadurch gekennzeichnet, daß** die Vorrichtung als Teil einer integrierten Schaltung ausgeführt ist.

## Claims

1. A method for single channel reception of an analog signal, wherein
- the analog signal (50) comprises a plurality of symbols and is converted into a digital signal (52) corresponding to a plurality of digital values,
- the digital signal (52) is supplied to a switch (14),
- the switch (14) is controlled by a clock regulating means (20),
- a first buffer memory (16) is connected downstream of the switch (14), which buffer memory stores at least one digital receive value (54), switched through by the switch, of the digital signal (52),
- the output of the first buffer memory is connected to a signal processing means (22),
- a signal processing controller (18) is provided for the digital signal,
- the signal processing controller sends a control signal (62) to the signal processing means, which signal indicates the state of the buffer memory,
- the signal processing means (22) processes the digital receive value in a predetermined processing period in the presence of the control signal (62), and
- the signal processing means (22) stores the processed signal in a second buffer memory (23).

2. A method for multi-channel reception of a plurality of analog signals corresponding to a plurality of channels, wherein
- each analog signal (50, 51) comprises a plurality of symbols and is converted into a digital signal (52, 53),
- each digital signal (52, 53) is supplied in each case to a switch (14, 15),
- each switch (14, 15) is in each case controlled by a clock regulating means (20, 21),
- a first buffer memory (16, 17) is connected in each case downstream of each switch (14, 15), which buffer memory stores at least one digital receive value (54, 55), switched through by the switch, of the digital signal (52, 53),
- the output of each first buffer memory is connected to a signal processing means (22),
- a signal processing controller (18, 19) is provided in each case for each digital signal,
- each signal processing controller sends a control signal (62, 63) to the signal processing means, which signal indicates the state of the respective buffer memory,
- the signal processing means (22) processes the digital receive value of a channel in each case in a predetermined processing period in the presence of the respective control signal (62, 63), and
- the signal processing means stores the processed signal in each case in a second buffer memory (23, 24) assigned to the respective channel.

3. A method according to claim 1 or claim 2, **characterised in that** each analog signal is converted in each case with an analog/digital converter (12, 13), wherein n samples are taken from each symbol of the analog signal and converted into n digital values.

4. A method according to claim 3, **characterised in that** precisely one of the n digital values of the respective switch (14, 15) is switched through to the respective first buffer memory (16, 17).

5. A method according to claim 4, **characterised in that** each clock regulating means (20, 21) controls the respective switch (14, 15) in such a way that a regulating signal (60, 61) emitted by the signal processing means (22) is evaluated by the clock regulating means (20, 21) for selection of one of the n digital values.

6. A method according to any one of the preceding claims, **characterised in that** each switch (14, 15) is controlled by a regulated symbol clock (56, 57) generated by a clock regulating means (20, 21) assigned in each case to the switch, such that in each case precisely one digital receive value is switched through per symbol.

7. A method according to any one of the preceding claims, **characterised in that** the clock regulation performed by the clock regulating means (20, 21) generates a symbol clock (56, 57) variable within given boundaries and a symbol period duration for each channel.

8. A method according to one of the preceding claims, **characterised in that** the signal processing means (22) is operated with a constant processing frequency.

9. A method according to claim 8, **characterised in that** for each channel the receive clock (68, 69) for reading out the digital receive values from the first buffer memory (16, 17) and inputting the digital receive values into the signal processing means (22) is constant.

10. A method according to either one of claims 8 or 9, **characterised in that**, in the case of multi-channel reception, the constant receive clocks (68, 69) of the signal processing means (22) are displaced relative to one another in accordance with the processing periods of the channels.

11. A method according to any one of the preceding claims, **characterised in that** the overall processing time which the signal processing means (22) requires for processing the digital receive values is shorter than or equal to the symbol period duration, maximally shortened by the clock regulation, of the channel operated with the highest frequency of all the connected channels.

12. A method according to any one of the preceding claims, **characterised in that** each signal processing controller (18, 19) in each case evaluates read and write accesses to the first buffer memory and sends a control signal (62, 63) to the signal processing means (22), which, if a new digital receive value is available in the first buffer memory (16, 17) at the time of the read access to the first buffer memory, activates the signal processing means (22) and, if no new digital receive value is available at the time of read access to the first buffer memory due to the more rapid signal processing means compared to the regulated symbol clock (56, 57), deactivates the signal processing means for the duration of the period reserved for the respective channel, such that no new digital receive value of the respective channel is accepted into the signal processing means.

13. A method according to any one of the preceding claims, **characterised in that** each analog signal is converted in each case with an analog/digital converter (12, 13) in accordance with the sigma delta method.

14. A method according to any one of the preceding claims, **characterised in that** a plurality of third buffer memories (25, 26) is provided corresponding to the plurality of channels, each third buffer memory (25, 26) in each case storing a digital transmit signal (64, 65) assigned to an analog signal (50, 51) and the output of each third buffer memory being fed to the signal processing means (22) for echo cancellation.

15. A method according to claim 14, **characterised in that** each clock regulating means (20, 21) generates a second clock signal (58, 59), which is fed to the respective third buffer memory (25, 26) for clocking.

16. A method according to any one of the preceding claims, **characterised in that** the signal processing means (22) executes a program from a read-only memory for echo cancellation and equalisation.

17. A device for single channel reception of an analog signal, wherein
- the analog signal (50) is supplied to an analog/digital converter (12),
- the output of the analog/digital converter is connected to a first buffer memory (16) via a switch (14),
- the output of the first buffer memory (16) is connected to a signal processing means (22),
- the switch (14) is controlled by a clock regulating means (20),
- a signal processing controller (18) transmits a control signal (62) to the signal processing means (22), in order to signal the state of the first buffer memory (16), and
- the signal processing means (22) processes the digital receive values as a function of the control signal (62) and stores the processed signal in an assigned second buffer memory (23).

18. A device for multi-channel reception of a plurality of analog signals corresponding to a plurality of channels, wherein
- each analog signal (50, 51) is supplied in each case to an analog/digital converter (12, 13),
- the output of each analog/digital converter is connected in each case to a first buffer memory (16, 17) in each case via a switch (14, 15),
- the output of each first buffer memory (16, 17) is connected to a signal processing means (22),
- each switch (14, 15) is in each case controlled by a clock regulating means (20, 21),
- a signal processing controller (18, 19) is provided for each channel, and each signal processing controller (18, 19) transmits a control signal (62, 63) to the signal processing means (22), in order to signal the state of the first buffer memory (16, 17), and
- the signal processing means (22) processes the digital receive values of the channels in each case as a function of the respective control signal (62, 63) and stores each processed signal in each case in a second buffer memory (23, 24) assigned to the respective channel.

19. A device according to claim 17 or claim 18, **characterised in that** the analog/digital converters (12, 13) operate according to the sigma delta method.

20. A device according to any one of claims 17 - 19, **characterised in that** a plurality of third buffer memories (25, 26) is provided corresponding to the plurality of channels, each third buffer memory (25, 26) in each case storing a digital transmit signal (64, 65) assigned to an analog signal (50, 51) and the output of each third buffer memory being supplied to the signal processing means (22) for echo cancellation.

21. A device according to any one of claims 17 - 20, **characterised in that** the signal processing means (22) comprises a read-only memory, in which is stored a program for echo cancellation and equalisation.

22. A device according to any one of claims 17 - 21, **characterised in that** the device takes the form of part of an integrated circuit.

## Revendications

1. Procédé de réception monocanal d'un signal analogique, dans lequel
- le signal analogique (50) présente une pluralité de symboles et est converti en un signal numérique (52) correspondant à une pluralité de valeurs numériques,
- le signal numérique (52) est introduit dans un commutateur (14),
- le commutateur (14) est commandé par un dispositif de régulation de cadence (20),
- une première mémoire tampon (16) est branchée en aval du commutateur (14), laquelle mémorise au moins une valeur de réception numérique (54) du signal numérique (52) interconnectée par le commutateur,
- la sortie de la première mémoire tampon est reliée à un dispositif de traitement de signaux (22),
- une unité de commande de traitement de signaux (18) est prévue pour le signal numérique,
- l'unité de commande de traitement de signaux envoie un signal de commande (62) au dispositif de traitement de signaux, lequel affiche l'état de la mémoire tampon,
- le dispositif de traitement de signaux (22) traite la valeur de réception numérique dans un intervalle de temps de traitement prescrit en présence du signal de commande (62), et
- le dispositif de traitement de signaux (22) mémorise le signal traité dans une deuxième mémoire tampon (23).

2. Procédé de réception multicanaux d'une pluralité de signaux analogiques correspondant à une pluralité de canaux, dans lequel
- chaque signal analogique (50,51) présente une pluralité de symboles et est converti en un signal numérique (52,53),
- chaque signal numérique (52,53) est respectivement introduit dans un commutateur (14,15),
- chaque commutateur (14,15)est respectivement commandé par un dispositif de régulation de cadence (20,21),
- une première mémoire tampon (16,17) est respectivement branchée en aval de chaque commutateur (14,15), laquelle mémorise au moins une valeur de réception numérique (54,55) du signal numérique (52,53) interconnectée par le commutateur,
- la sortie de chaque première mémoire tampon est reliée à un dispositif de traitement de signaux (22),
- pour chaque signal numérique est respectivement prévue une unité de commande de traitement de signaux (18,19),
- chaque unité de commande de traitement de signaux envoie un signal de commande (62,63) au dispositif de traitement de signaux, lequel affiche l'état de la mémoire tampon respective,
- le dispositif de traitement de signaux (22) traite la valeur de réception numérique d'un canal dans respectivement un intervalle de temps de traitement prescrit en présence du signal de commande (62,63) respectif, et
- le dispositif de traitement de signaux mémorise le signal traité respectivement dans une deuxième mémoire tampon (23,24) coordonnée au canal respectif.

3. Procédé selon la revendication 1 ou 2, **caractérisé en ce que** chaque signal analogique est respectivement converti avec un convertisseur analogique/numérique (12,13), dans lequel n valeurs d'échantillonnage sont prises à chaque symbole du signal analogique et sont converties en n valeurs numériques.

4. Procédé selon la revendication 3, **caractérisé en ce que** exactement une des n valeurs numériques provenant du commutateur respectif (14,15) est interconnectée à la première mémoire tampon respective (16,17).

5. Procédé selon la revendication 4, **caractérisé en ce que** chaque dispositif de régulation de cadence (20,21) commande le commutateur respectif (14,15) de telle sorte que un signal de régulation (60,61) envoyé par le dispositif de traitement de signaux (22) soit évalué par le dispositif de régulation de cadence (20,21) afin de sélectionner une des n valeurs numériques.

6. Procédé selon une des revendications précédentes, **caractérisé en ce que** chaque commutateur (14,15) est commandé par une cadence de symboles (56,57) régulée générée par un dispositif de régulation de cadence (20,21) respectivement coordonné au commutateur, de sorte que respectivement exactement une valeur de réception numérique par symbole soit interconnectée.

7. Procédé selon une des revendications précédentes, **caractérisé en ce que** la régulation de cadence effectuée par le dispositif de régulation de cadence (20,21) génère une cadence de symboles (56,57) variable dans des limites déterminées et une durée de période de symbole pour chaque canal.

8. Procédé selon une des revendications précédentes, **caractérisé en ce que** le dispositif de traitement de signaux (22) est exploité à une fréquence de traitement constante.

9. Procédé selon la revendication 8, **caractérisé en ce que** pour chaque canal la cadence de réception (68,69) est constante pour la lecture des valeurs de réception numériques sortant de la première mémoire tampon (16,17) et la lecture des valeurs de réception numérique récupérées dans le dispositif de traitement de signaux (22).

10. Procédé selon une des revendications 8 ou 9, **caractérisé en ce que** dans le cas de la réception multicanaux les cadences de réception constantes (68,69) du dispositif de traitement de signaux (22) sont décalées les unes par rapport aux autres de manière correspondante aux intervalles de temps de traitement des canaux.

11. Procédé selon une des revendications précédentes, **caractérisé en ce que** le temps de traitement total, que requiert le dispositif de traitement de signaux (22) pour le traitement des valeurs de réception numériques, est plus court ou identique à la durée de période de symbole raccourcie au maximum par la régulation de cadence du canal, qui est exploitée par tous les canaux connectés à la fréquence la plus haute.

12. Procédé selon une des revendications précédentes, **caractérisé en ce que** chaque unité de commande de traitement de signaux (18,19) évalue respectivement les accès d'écriture et de lecture sur la première mémoire tampon et envoie un signal de commande (62,63) au dispositif de traitement de signaux (22), qui est disponible pour le cas où au moment de l'accès de lecture sur la première mémoire tampon (16,17), une nouvelle valeur de réception numérique est disponible dans la première mémoire tampon, le dispositif de traitement de signaux (22) est activé et pour le cas où en raison des dispositifs de traitement de signaux plus rapides comparé à la cadence de symbole régulée (56,57) au moment de l'accès de lecture sur la première mémoire tampon, aucune nouvelle valeur de réception numérique n'est disponible, le dispositif de traitement de signaux est désactivé pour la durée de l'intervalle de temps réservé pour le canal respectif, de sorte qu'aucune nouvelle valeur de réception numérique du canaux respectif ne soit admise dans le dispositif de traitement de signaux.

13. Procédé selon une des revendications précédentes, **caractérisé en ce que** chaque signal analogique est respectivement converti avec un convertisseur analogique/numérique (12,13) selon le procédé Sigma-Delta.

14. Procédé selon une des revendications précédentes, **caractérisé en ce que** de manière correspondante à la pluralité de canaux une pluralité de troisièmes mémoires tampons (25,26) est prévue, dans lequel chaque troisième mémoire tampon (25,26) mémorise respectivement un signal d'émission numérique (64,65) coordonné à un signal analogique (50,51) et la sortie de chaque troisième mémoire tampon est introduite dans le dispositif de traitement de signaux (22) à des fins de compensation d'écho.

15. Procédé selon la revendication 14, **caractérisé en ce que** chaque dispositif de régulation de cadence (20,21) génère un deuxième signal de cadence (58,59), qui est introduit dans la troisième mémoire tampon respective (25,26) à des fins de synchronisation.

16. Procédé selon une des revendications précédentes, **caractérisé en ce que** le dispositif de traitement de signaux (22) exécute un programme contenu dans une mémoire morte pour la compensation d'écho et l'égalisation.

17. Dispositif de réception monocanal d'un signal analogique, dans lequel
- le signal analogique (50) est introduit dans un convertisseur analogique/numérique (12),
- la sortie du convertisseur analogique/numérique est reliée par l'intermédiaire d'un commutateur (14) à une première mémoire tampon (16),
- la sortie de la première mémoire tampon (16) est reliée à un dispositif de traitement de signaux (22),
- le commutateur (14) est commandé par un dispositif de régulation de cadence (20),
- une unité de commande de traitement de signaux (18)transmet un signal de commande (62) au dispositif de traitement de signaux (22), afin de signaliser l'état de la première mémoire tampon (16), et
- le dispositif de traitement de signaux (22) traite les valeurs de réception numériques en fonction du signal de commande (62) et mémorise le signal traité dans une deuxième mémoire tampon coordonnée (23).

18. Dispositif de réception multicanaux d'une pluralité de signaux analogiques correspondant à une pluralité de canaux, dans lequel
- chaque signal analogique (50,51) est respectivement introduit dans un convertisseur analogique/numérique (12,13),
- la sortie de chaque convertisseur analogique/numérique est reliée par l'intermédiaire de respectivement un commutateur (14,15) à respectivement une première mémoire tampon (16,17),
- la sortie de chaque première mémoire tampon (16,17) est reliée à un dispositif de traitement de signaux (22),
- chaque commutateur (14,15) est commandé respectivement par un dispositif de régulation de cadence (20,21),
- pour chaque canal une unité de commande de traitement de signaux (18,19) est prévue, et chaque unité de commande de traitement de signaux (18,19) transmet un signal de commande (62,63) au dispositif de traitement de signaux (22), afin de signaliser l'état de la première mémoire tampon (16,17), et
- le dispositif de traitement de signaux (22) traite les valeurs de réception numérique des canaux respectivement en fonction du signal de commande (62,63) respectif et mémorise chaque signal traité respectivement dans une deuxième mémoire tampon (23,24) coordonnée au canal respectif.

19. Dispositif selon la revendication 17 ou 18, **caractérisé en ce que** les convertisseurs analogique/numérique (12,13) fonctionnent d'après le procédé Sigma-Delta.

20. Dispositif selon une des revendications 17 à 19, **caractérisé en ce que** il est prévu de manière correspondante à la pluralité de canaux une pluralité de troisièmes mémoires tampons (25,26), dans lequel chaque troisième mémoire tampon (25,26) mémorise respectivement un signal d'émission numérique (64,65) coordonné à un signal analogique (50,51) et la sortie de chaque troisième mémoire tampon du dispositif de traitement de signaux (22) est introduite à des fins de compensation d'écho.

21. Dispositif selon une des revendications 17 à 20, **caractérisé en ce que** le dispositif de traitement de signaux (22) présente une mémoire morte, dans laquelle un programme de compensation d'écho et d'égalisation est mémorisé.

22. Dispositif selon une des revendications 17 à 21, **caractérisé en ce que** le dispositif est conçu comme une partie d'un circuit intégré.
